# EUROPEAN PATENT APPLICATION

(11) **EP 0 782 036 A1**
(43) Date of publication of application: **02.07.1997**
(21) Application number: 96309525.2
(22) Date of filing: 27.12.1996
(51) Int. Cl.: G02F 1/1335, G02F 1/136

(54) **Array of cells with light active circuitry**

(30) Priority: 29.12.1995 US 581087
(71) Applicant: XEROX CORPORATION, Rochester New York 14644 (US)
(72) Inventor: Weisfield, Richard L., Los Altos, California 94024 (US); Hack, Michael G., Mountain View, California 94041 (US); Levine, Joel, Millbrae, California 94030 (US)
(74) Representative: Reynolds, Julian David

(57) **Abstract**

An array (10) includes a patterned dark matrix layer (34) electrically connected to a fixed potential (V_{F}). The dark matrix material is sufficiently conductive that capacitively coupled signals decay in a time (τ_{D}) that is significantly less than addressing time (τ_{A}) of each cell of the array. In one form, each cell's dark matrix can overlap the cell's electrode around its perimeter, and the overlap areas of the dark matrix and the electrode can be sufficiently large and a part of a dielectric layer between them can be sufficiently thin that the storage capacitor they form meets the cell's requirements.

## Description

The present invention relates to circuitry formed on substrates. More specifically, the present invention relates to arrays of light active cells.

US-A-5,414,547, discloses a liquid crystal display device with black matrices made of molybdenum silicide layers. US-A-5,414,547, discloses that a black matrix can be formed on a transparent substrate on which an active matrix array is formed, with minimum width. The black matrix can be formed along the boundary region of each pixel region and on the surface of a TFT, over an insulating film that in turn is over a pixel electrode. Since a potential is not applied to the black matrix so that it is in a floating state, its potential changes depending on operational state of the display The potential changes cause display quality to deteriorate. A short circuit between the black matrix and any of the pixel electrodes, data lines, or gate lines will cause a defect. US-A-5,414,547, further discloses that the black matrix can instead be a conductive and light shielding layer formed in a pixel's boundary region, insulated from data lines, gate lines, and other pixel electrodes, but electrically connected to the pixel electrode of the pixel it bounds. For holding capacitance, either the pixel electrode or the conductive and light shielding layer has an outer end located adjacent and above a forward gate line to form an overlapping portion.

Suzuki, K., "High-Aperture TFT Array Structures," *SID 94 Digest*, 1994, pp. 167-170, describes a shield Cs structure. Part of a black matrix (BM) pattern is formed on an array substrate, simultaneously with a gate pattern. The BM pattern has some overlap with a pixel electrode, and is referred to as a shield Cs pattern because it functions as a common electrode of a storage capacitance, Cs. Because it works as an electrostatic shield layer, coupled capacitance between a signal line and the pixel electrode can be reduced. The Cs line extends across the center of the pixel between signal lines.

The invention addresses problems that affect arrays of light active cells fabricated on substrates.

An array of light active cells, such as an active matrix array for a liquid crystal display (LCD), must typically include light blocking material, often referred to as a "dark matrix" or "black matrix," positioned to prevent undesired light reflection or transmission. In a backlit LCD, for example, dark matrix is typically necessary along data lines and scan lines to block light from passing around the edges of each cell's light control electrode, which is typically formed in a layer of indium-tin-oxide (ITO). In addition, dark matrix is also typically necessary over each cell's thin film transistor (TFT).

One conventional technique forms a patterned dark matrix layer on an opposing cover plate of an LCD. This technique requires a significant alignment tolerance, typically 5 µm, between the active matrix and cover plates, so that a 5 µm wide band at the perimeter of each cell's ITO electrode is covered by black matrix. As a result, the dark matrix significantly reduces aperture ratio.

Another conventional technique, illustrated in the aforementioned US-A-5, 414, 547, forms a patterned dark matrix layer over an insulating or passivating layer that covers an active matrix array. This technique, referred to herein as "top dark matrix," allows a much tighter tolerance between dark matrix and ITO electrode, less than 2 µm due to the excellent alignment capabilities of present-day steppers. The tighter tolerance can significantly increase fill factor--for a 400 spot per inch LCD, top dark matrix can increase fill factor from 30% to 40%.

Although it improves aperture ratio, a top dark matrix of a conductive metal at a floating potential can capacitively couple to neighboring pixels, leading to crosstalk. If each cell's dark matrix metal covers both an edge of a data line and an edge of the cell's ITO electrode, electrical signals on the data lines will couple into each cell's ITO electrode. The magnitude of coupling depends on the thickness of the passivation layer and the relative sizes of the couplings, but typical values of crosstalk are around 10%, sufficiently great to severely impact high quality gray scale displays.

Another conventional technique, exemplified by the Suzuki article described above, uses part of a gate layer to form part of a dark matrix pattern and also to provide a storage capacitor electrode. In some implementations of this technique, capacitor electrodes for a row of cells are electrically connected to each other and to a fixed potential. This technique requires the gate layer to perform at least three functions--scan line, capacitor electrode, and light blocking. Optimal scan line structures are not, however, optimal for light blocking. In addition, the capacitor electrode must be isolated from at least one of the scan lines adjacent a cell, meaning that it cannot fully block light on all four sides of the cell. Because of these and other conflicts between its functions, the gate layer must perform at least one of its functions suboptimally. Therefore, this technique typically requires another dark matrix layer in addition to the gate layer.

A first aspect of the invention is based on the discovery of a new technique for alleviating the capacitive coupling problem and the problem of conflicting gate layer functions. The technique provides a separate patterned layer of dark matrix material that is conductive. Each part of the patterned layer is at a fixed potential, such as ground or another suitable potential. The dark matrix material is sufficiently conductive that signals capacitively coupled to the patterned layer decay in significantly less time than the signal interval during which a cell's circuitry in the array receives or provides electric signals, so that array performance is not affected by capacitively coupled signals. For example, if the array is used in an active matrix LCD (AMLCD), the dark matrix material can be sufficiently conductive that capacitively coupled signals decay in less than 1 µsec, much less than a cell's addressing time in an AMLCD. But because the dark matrix layer is separate from layers in which scan lines and data lines are formed, there is not a conflict between its functions.

In the first aspect of the invention, there is provided an array of light active cells that includes: a substrate with a surface at which circuitry is formed; array circuitry at the surface of the substrate; the array circuitry including: scan lines in a first layer of conductive material; data lines in a second layer of conductive material; and for each scan line and each data line, a cell that has light active circuitry for receiving electric signals from or providing electric signals to the data line under control of the scan line; the scan line providing scan signals so that the light active circuitry receives or provides electric signals during an addressing time; and a patterned layer of dark matrix material that includes, for each cell, a dark matrix part for blocking light in an area of the cell; the dark matrix material being conductive; characterised in that; electrical connection is provided between each cell's dark matrix part and fixed potential circuitry for holding the dark matrix part at a fixed potential; and in that the dark matrix material has a conductivity such that capacitively coupled signals received by each cell's dark matrix part from outside the cell decay in significantly less time than the addressing time.

In particular embodiments the patterned layer of dark matrix material can include a highly conductive metal sublayer coated with a light absorbent sublayer. A layer of chromium, for example, could be coated with Cr₂O₃. Similarly, aluminum or a multilayer metal structure that includes aluminum could have a light absorbent coating.

All the cells' dark matrix parts can be connected to form a single connected component that is electrically connected to the fixed potential circuitry. The fixed potential can be ground potential. Each cell's dark matrix part can include lines that block light along the edges of the scan lines and data lines that bound the cell's light active area, with sufficiently small overlap that most of each scan line and most of each data line is not overlapped by dark matrix parts. The patterned layer can be over the scan lines and data lines.

In another aspect of the invention, there is provided an array according to claim 6 of the appended claims.

In another aspect of the invention, there is provided a method of producing an array as in claim 10 of the appended claims.

One embodiment of the invention is based on the discovery of a technique that uses fixed potential dark matrix as described above to significantly simplify each cell's circuitry. One complicating factor in the circuitry of a light active cell is the need for a storage capacitor. In a light transmissive AMLCD, for example, the storage capacitor in each cell must be sufficiently large to hold the cell's transparent electrode within any of two or more voltage bands during the interval between successive scan line signals.

This embodiment provides a storage capacitor that includes part of the cell's electrode, part of the dark matrix, and part of a dielectric layer between the electrode and the dark matrix. This technique can provide sufficient capacitance that the cell does not require an additional storage capacitor electrode, significantly simplifying cell circuitry and enhancing aperture ratio by reducing the active area of the cell that is blocked by opaque layers.

This embodiment can also be implemented in the arrays as described above, with the cell electrode and the cell's dark matrix part each having an overlap area in which they are separated by a dielectric layer. As a result, the overlap areas of the electrode and of the dark matrix part together with the part of the dielectric layer between them form a storage capacitor. The overlap area can be sufficiently large and the dielectric layer sufficiently thin that the storage capacitor has at least the minimum storage capacitance required by the cell. The overlap area can have a substantially uniform width along the entire perimeter of the electrode.

The techniques can provide an array of light active cells with a conductive dark matrix at a fixed potential that includes storage capacitor electrodes. The techniques could be applied, for example, in a light valve array for an AMLCD.

The techniques described above are advantageous because they provide ways to integrate dark matrix onto an active matrix array with greatly reduced alignment tolerance, allowing for much greater aperture ratio and higher resolution without sacrificing electrical performance. In addition, the dark matrix can provide a storage capacitor that makes the conventional storage capacitor electrode unnecessary, significantly simplifying the array circuitry and further increasing aperture ratio. For designs in which the storage capacitor electrode would otherwise be under or over an adjacent scan line, the dark matrix storage capacitor can reduce scan line capacitance, providing several possible advantages including increased addressing speed, narrower scan lines, and greater flexibility in choosing a scan line material.

These advantages may be especially important for a very high resolution AMLCD. As resolution and number of lines in a display increase, the time for addressing each scan line decreases, tightly constraining the types and thicknesses of scan line material that can be used. For example, to address a page-size display with 157.5 spots per cm (400 spots per inch) resolution, the addressing time should be less than 5 µsec. If scan line capacitance is 150 pF, as would be expected for conventional designs with storage capacitor electrodes under scan lines, this scanning speed can only be attained with scan line material with a sheet resistance no greater than 0.15 Ω/□ a value below the resistance of currently available hillock-free aluminum lines. Therefore, reducing the scan line capacitance by eliminating electrodes under scan lines may allow very high resolution AMLCDs using currently available scan line materials. Reduced scan line capacitance may also allow narrower scan lines in very high resolution AMLCDs, further increasing aperture ratio.

Embodiments of the invention will now be described, by way of example, with reference to the accompanying drawings, in which:
Fig. 1 is a schematic diagram showing an array in which a light active cell includes part of a fixed potential dark matrix in accordance with one embodiment of the present invention;
Fig. 2 is schematic cross section showing a storage capacitor that includes overlap areas of a fixed potential dark matrix and a cell electrode and part of a dielectric layer between them;
Fig. 3 is a schematic circuit diagram showing layout of a cell with dark matrix connected to a fixed potential;
Fig. 4 is a schematic circuit diagram showing a crossing region of Fig. 3 in greater detail;
Fig. 5 is a cross sectional view of the cell in Fig. 3, taken along line A-A;
Fig. 6 is a cross sectional view of the cell in Fig. 3, taken along line B-B;
Fig. 7 is a schematic circuit diagram showing another layout of a cell with dark matrix connected to a fixed potential;
Fig. 8 is a cross sectional view of the cell in Fig. 7, taken along line C-C;
Fig. 9 is a cross sectional view of the cell in Fig. 7, taken along line D-D; and
Fig. 10 is a flow chart showing acts in producing a structure as shown in Figs. 7-9.

An array of circuitry may include rows and columns, with a line for each row and a line for each column. Lines in one direction may be "data lines" through which a cell receives or provides signals that determine or indicate its state. Lines in the other direction may be "scan lines" through which a cell receives a signal enabling it to receive signals from or provide signals to its data line. The cell receives signals from or provides signals to a data line "under control of' a scan line if signals from the scan line enable the cell to receive signals from or provide signals to the data line.

In an array with scan lines and data lines, a cell's "addressing time" is the signal interval during which the cell's scan line enables it to receive or provide signals through its data line.

In an array of circuitry, a cell is a "light active cell" if the cell includes circuitry that can interact with light, such as by sensing light, by emitting light, or by modifying reflected or transmitted light. The cell circuitry of a light active cell is "light active circuitry." The cell's "light active area" is the area within which the cell's light active circuitry can interact with light.

In an array of light active cells, a patterned layer of dark matrix material "blocks light in an area" if the dark matrix material blocks nearly all light in the area so that light cannot be transmitted or reflected in the area.

A component is "at a fixed potential" if, during operation of the circuit, it is connected through a combination of leads and lines to a low impedance component, referred to herein as "fixed potential circuitry," that is treated as being at a fixed potential. For example, an integrated circuit typically has an external ground connection that is treated as zero potential; a component that is connected by a combination of leads and lines to the external ground connection is at a fixed potential and, more specifically, is at ground potential.

A "capacitively coupled signal" is a signal that a component receives capacitively rather than through other events, such as flow of current to or from the component.

A capacitively coupled signal "decays" in a material if the signal rapidly loses energy as it propagates through the material. The rate at which the signal loses energy may be indicated by a "time constant" τ such that the voltage of the signal as a function of time can be approximated by the equation ν=V₀e^{-a*t*}, where a=(1/τ)

A signal decays "in significantly less time than" a signal interval or other time period if the rate at which the signal loses energy is indicated by a time constant that is less than half the signal interval or other time period.

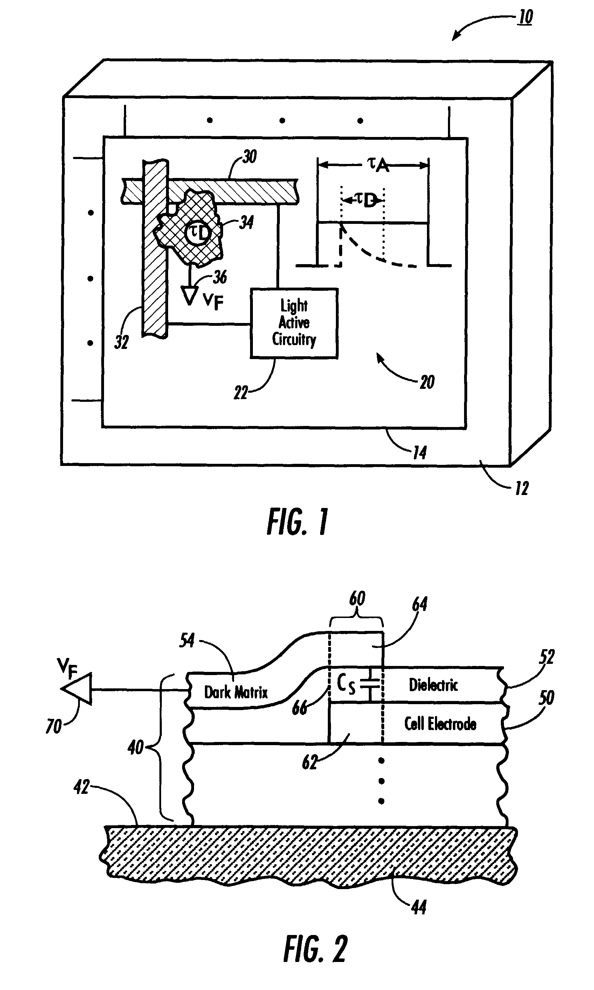

Figs. 1 and 2 show general features of the invention.

Array 10 in Fig. 1 includes substrate 12 with array circuitry 14 including an array of cells. Representative cell 20 is shown, with light active circuitry 22 capable of interacting with light, such as by emitting, sensing, or controlling light. Fig. 1 also shows scan line 30 and data line 32, formed in first and second layers of conductive material. Light active circuitry 22 is connected for receiving electric signals from or providing electric signals to data line 32 under control of scan line 30. Scan line 30 provides scan signals so that light active circuitry 22 receives or provides signals during addressing time τ_{A}.

Cell 20 also includes dark matrix part 34, part of a patterned layer of dark matrix material that blocks light in an area of cell 20. The dark matrix material is conductive. Dark matrix part 34 is electrically connected to fixed potential circuitry 36 and is therefore held at the fixed potential V_{F}. In addition, the dark matrix material is sufficiently conductive that capacitively coupled signals that dark matrix part 34 receives from outside cell 20 decay with time constant τ_{D}, which is significantly less than τ_{A}. Time constant τ_{D} indicates the rate at which capacitively coupled signals decay. For example, a capacitively coupled signal may decay in a manner that can be approximated by the exponential function ν=V₀e^{-a*t*}, where a=(1/τ_{D}).Because they decay in significantly less time than addressing time τ_{A}, capacitively coupled signals from outside cell 20 do not affect performance of array 10.

Circuitry 40 in Fig. 2 is formed on surface 42 of substrate 44, which could be substrate 12 in Fig. 1. Circuitry 40 includes cell electrode 50, formed in a layer of conductive material. Cell electrode 50 is illustratively shown over a number of other layers that could, for example, include scan lines, data lines, and a switching element for a cell, such as a TFT. Over cell electrode 50 are dielectric layer 52 and then dark matrix 54, a cell's part of a patterned layer of dark matrix material that is conductive. As shown, dark matrix 54 overlaps cell electrode 50.

Capacitor 60 includes overlap area 62 of cell electrode 50, overlap area 64 of dark matrix 54, and part 66 of dielectric layer 52 between overlap areas 62 and 64. Even though dark matrix 54 is electrically connected to fixed potential circuitry 70 and is therefore held at fixed potential V_{F}, capacitor 60 has capacitance C_{S}, and C_{S} can provide a cell's required storage capacitance if overlap areas 62 and 64 are large enough and if part 66 of dielectric layer 52 is thin enough. In general, a cell requires a storage capacitance that is at least two or three times as large as the capacitance of the liquid crystal in the area controlled by the cell's electrode.

The order of layers in Fig. 2 is merely illustrative: Cell electrode 50 could instead be over dielectric layer 52 and dark matrix 54, and other layers that include scan lines, data lines, and switching elements could instead be over rather than under the layers that include cell electrode 50, dielectric layer 52, and dark matrix 54.

The general features described above could be implemented in numerous ways in various arrays. The implementations described below are suitable for AMLCD arrays.

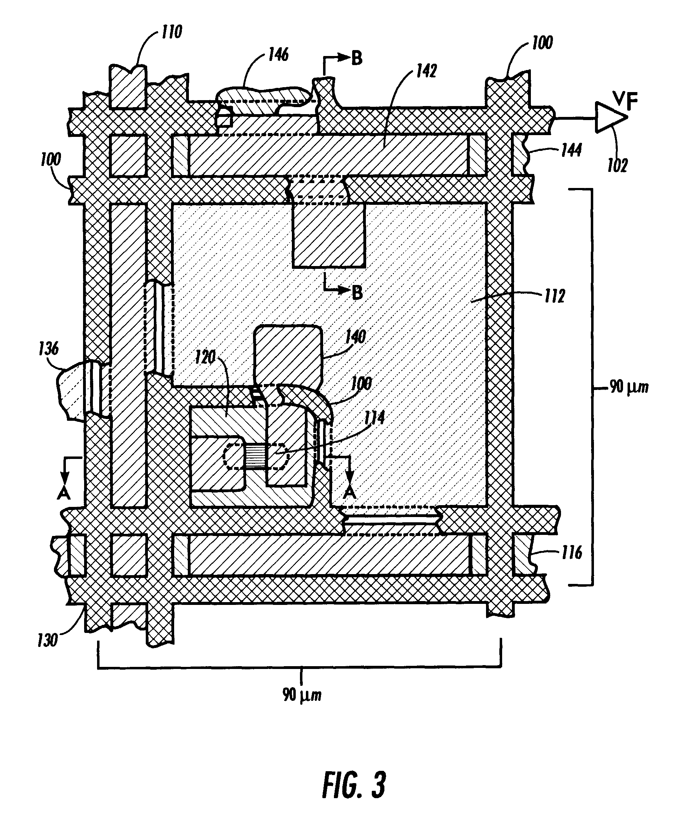

Figs. 3-6 illustrate a first implementation in which a fixed potential dark matrix is formed over a conventional passivation layer. The implementation in Figs. 3-6 can be made using AMLCD technology described in US-A-5, 491, 347.

Fig. 3, which is a modified version of Fig. 3 of the aforementioned US-A-5, 491, 347, shows a layout for a light control unit of an AMLCD. Fig. 3 shows several layers, with upper layers that are farthest from the substrate's surface obscuring lower layers. The uppermost layer shown in Fig. 3 is a dark matrix layer which forms dark matrix grid 100, connected to fixed potential V_{F} as shown schematically by fixed voltage circuitry 102. The next layer is a top metal layer, which forms data line 110 connected to a channel lead of an amorphous silicon (a-Si) transistor that switches the light control unit; the top metal layer also forms several other features described below. The next layer shown is a layer of indium-tin-oxide (ITO), which forms transparent electrode 112. The next layer is a top nitride layer, which forms insulating island 114, part of the transistor; the top nitride is an insulating layer that can form other features as mentioned below. The lowest layer shown is a bottom metal layer, which forms scan line 116 and, connected to scan line 116, gate lead 120, which serves as the gate lead of the transistor.

Data line 110 provides a data signal to a column of light control units, one of which is shown in Fig. 3. The part of data line 110 that extends over gate lead 120 connects to one channel lead of the transistor. Scan line 116 similarly provides a scan signal to a row of light control units. If the transistor is normally OFF, for example, the scan signal provided by scan line 116 may make a transition from 0 to 1, then remain at 1 for 10 µsec or another appropriate addressing time, then make a transition back to 0, at which it remains while data lines provide data signals for other rows of light control units. During the addressing time, the transistor is ON, so that the transistor's channel conducts a data signal provided by data line 110 to the other channel lead.

Data line 110 and scan line 116 are illustratively each 10 µm wide, sufficiently wide that grid 100 could cover 2 µm along each edge of each line and leave an uncovered area 6 µm wide in the middle of each line. Data line 110 and scan line 116 cross in crossing region 130. Crossing region 130 can include an insulator formed by the top nitride layer and other features as necessary to ensure that the lines conduct signals adequately and that signals in the lines do not interfere.

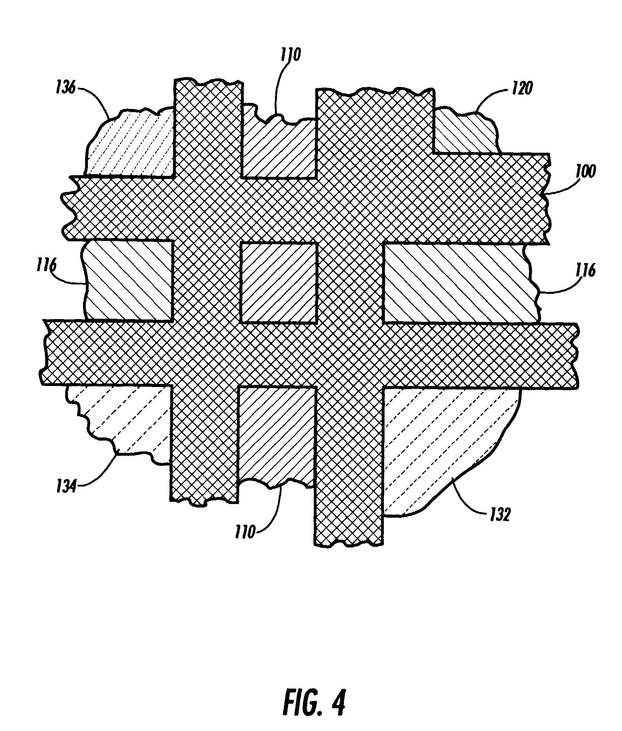

Fig. 4 shows crossing region 130 in greater detail, with the capacitor electrodes over scan line 116 omitted. In the upper right corner, grid 100 has broader lines to cover edges of gate lead 120 as well as edges of data line 110 and scan line 116. In the other three corners, grid 100 has lines of approximately 5 µm, wide enough to cover an edges of data line 110 and scan line 116 and also to cover an edge of one of transparent electrodes 132, 134, and 136, which are the transparent electrodes of the three other cells with corners that meet in crossing region 130.

Transparent electrode 112 connects to the other channel lead of the transistor through line 140, formed by the top metal layer. Therefore, when the transistor is conductive due to a scan signal provided to gate lead 120 by scan line 116, transparent electrode 112 receives and stores a data signal from data line 110 through line 140.

Transparent electrode 112 also connects to charging lead 142, which implements one electrode of a storage capacitor and is formed by the top metal layer. Scan line 144, formed by the bottom metal layer, implements the other electrode of the storage capacitor; scan line 144 also provides a scan signal to the next light control unit in the same column through gate lead 146.

The light control unit shown in Fig. 3 is square, and an array of identical light control units would have effective widths in the row and column directions of 90 µm x 90 µm.

The patterned layers shown in Figs. 3 and 4 can be produced using the technique described in relation to Fig. 4 of UA-A-5, 491, 347, but with additional operations after the passivation pattern is produced and before test and repair. The additional operations deposit and then pattern the dark matrix layer using conventional lithographic techniques to produce grid 100. The lithographic mask can include lines that cover all edges of data line 110, transparent electrode 112, and scan line 116, as illustrated in Figs. 3 and 4. The mask need not, however, cover the central portions of data line 110, of scan line 116, or of gate lead 120 if the array will be used in a backlit AMLCD, because the bottom and top metal layers will block light in those areas. Furthermore, leaving their central portions open reduces the capacitive load on data line 110 and scan line 116.

Dark matrix grid 100 can be connected to fixed potential circuitry 102 through a conventional electrical connection to ground or to the same low impedance fixed voltage source as the backplane contact, to avoid any net field across the liquid crystal cell. The electrical connection could be made directly through a pad formed in the dark matrix layer at the periphery of the array or, if the dark matrix layer does not provide a satisfactory surface for making such a connection, by cutting an opening through lower layers so that grid 100 is electrically connected through metal-to-metal contact to a part of the bottom metal layer or top metal layer that is in turn electrically connected to a pad.

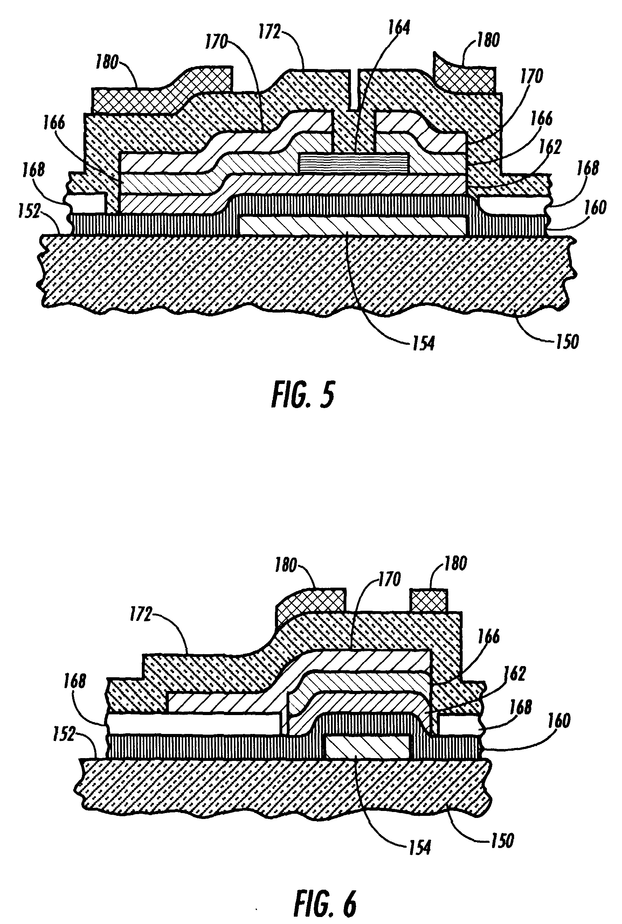

Figs. 5 and 6 show cross-sections along lines A-A and B-B in Fig. 3, respectively, for a thin-film structure produced as described above and in Fig. 4 of US-A-5, 491, 347. Layers of the same material are similarly shaded and bear the same reference number in the two drawings.

Substrate 150 has surface 152 at which a thin-film structure is formed, beginning with bottom metal layer 154 which in Fig. 6 forms scan line 144 and in Fig. 5 forms gate lead 120. Over bottom metal layer 154 is bottom nitride layer 160, followed by amorphous silicon layer 162, which in Fig. 5 includes a gated region in which the channel of a TFT can be formed. Over amorphous silicon layer 162 is top nitride layer 164, forming island 114 in Fig. 5. Over top nitride layer 164 where it exists and over amorphous silicon layer 162 elsewhere is n⁺ amorphous silicon layer 166, providing channel leads for the TFT in Fig. 5 and, together with bottom nitride layer 160 and amorphous silicon layer 162, forming a storage capacitor's dielectric in Fig. 6. Adjacent n⁺ layer 166 is ITO layer 168, forming transparent electrode 112 in both Figs. 5 and 6. Over n⁺ layer 166 and ITO layer 168 is top metal layer 170, forming line 140 and the part of data line 110 that electrically connects to a channel lead in Fig. 5 and forming charging lead 142 in Fig. 6. Over top metal layer 170 and other exposed layers is passivation layer 172.

Over passivation layer 172 is dark matrix layer 180. Dark matrix layer 180 could, for example, be a layer of aluminum with a black polyimide on top or on both bottom and top. Or, for easier contact at the periphery of the array, dark matrix layer 180 could be a layer of chromium with chromium oxide on both sides, also referred to as dark chromium.

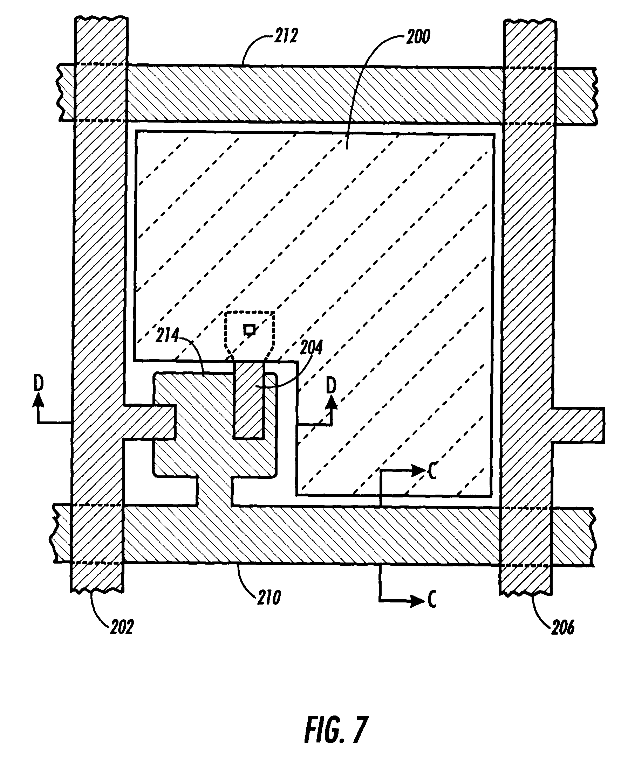

Figs. 7-10 show a second implementation in which a fixed potential dark matrix overlaps with a cell electrode to form a capacitor. The implementation in Figs. 7-10 can be made using AMLCD technology described in European Patent Application 96 303 901.1. The implementation of Figs. 7-10 could have higher resolution than that of Figs. 3-6; for example, each pixel could be square with effective widths of approximately 45 µm x 45 µm and scan lines and data lines could be approximately 5 µm wide.

Fig. 7 shows layout of a cell with dark matrix connected to a fixed potential. More particularly, Fig. 7, which is a modified version of Fig. 1 of European Patent Application 96 303 901.1, shows a layout for a light control unit of an AMLCD. Fig. 7 shows three layers, with upper layers that are farthest from the substrate's surface obscuring lower layers.

The uppermost layer shown in Fig. 7 is an ITO layer that forms transparent electrode 200. The next layer shown is a top metal layer, which forms data line 202 connected to one channel lead of an a-Si transistor; the transistor switches the light control unit in much the same manner as described above in relation to Fig. 3. The top metal layer also forms line 204, which connects the other channel lead of the a-Si transistor to transparent electrode 200, and data line 206, bounding the side of the transparent electrode 200 opposite data line 202. The lowest layer shown is a bottom metal layer, which forms scan lines 210 and 212 bounding transparent electrode 200 and also forms lead 214, the gate lead of the transistor, which is connected to scan line 210.

Fig. 7 does not explicitly show the dark matrix layer. Within the light control units of the array, however, the dark matrix layer forms a grid that is complementary to the ITO layer, overlapping the ITO layer by a distance sufficient to provide an adequate storage capacitor, such as 1 or 2 µm. Therefore, the edge of the dark matrix grid in Fig. 7 would be the same as that of transparent electrode 200, but a short distance inward. Because of the capacitor formed by the dark matrix grid and transparent electrode 200, the light control unit does not have an additional capacitor electrode. Because it covers all areas except transparent electrode 200, the dark matrix grid also covers all edges of the data lines and scan lines.

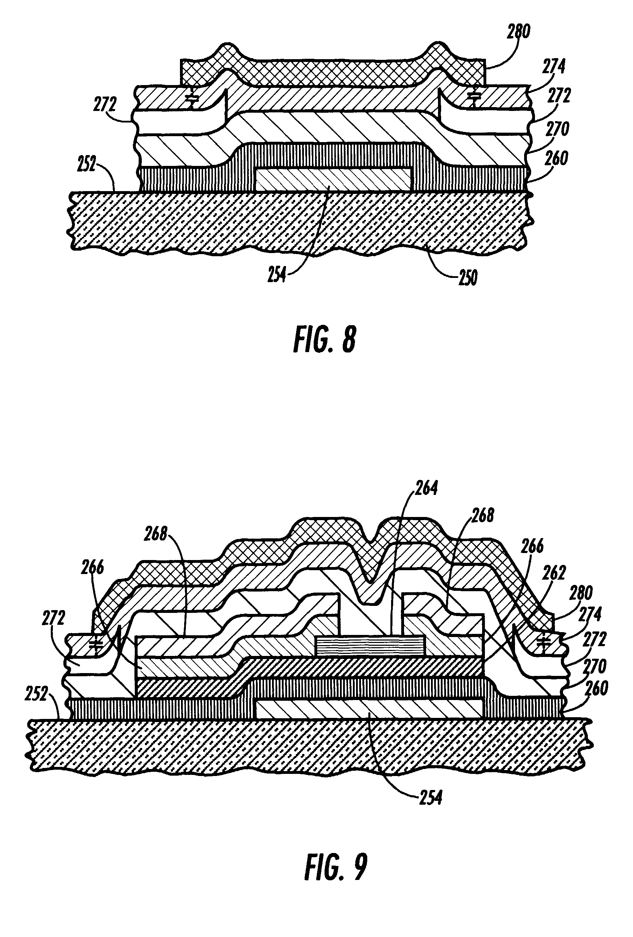

Figs. 8 and 9 show cross-sections along lines C-C and D-D in Fig. 7, respectively. Layers of the same material are similarly shaded and bear the same reference number in the two drawings.

Substrate 250 has surface 252 at which a thin-film structure is formed, beginning with bottom metal layer 254 which in Fig. 8 forms scan line 210 and in Fig. 9 forms gate lead 214. Over bottom metal layer 254 is bottom nitride layer 260, followed by amorphous silicon layer 262, which in Fig. 9 includes a gated region in which the channel of a TFT can be formed. Over amorphous silicon layer 262 is top nitride layer 264, forming an etch stopping island over the gated region of the amorphous silicon layer in Fig. 9.

Over top nitride layer 264 where it exists and over amorphous silicon layer 262 where it is exposed elsewhere is n⁺ amorphous silicon layer 266, providing channel leads for the TFT in Fig. 8. Over n⁺ layer 266 is top metal layer 268, forming data line 202 and line 204 in Fig. 9. Over top metal layer 268 is insulating layer 270, similar to the passivation layer described in European Patent Application 96 303 901.1 but not as thick. Over insulating layer 270 is ITO layer 272, forming transparent electrode 200 in both Figs. 8 and 9, as well as transparent electrodes of adjacent cells.

Over ITO layer 272 and other exposed layers is dielectric layer 274, which could be any appropriate dielectric material, such as silicon nitride, silicon oxide, or silicon oxynitride. Over dielectric layer 274 is dark matrix layer 280. Dark matrix layer 280 could, for example, be a layer of aluminum with a black polyimide on top or on both bottom and top. Or, for easier contact at the periphery of the array, dark matrix layer 280 could be a layer of chromium with chromium oxide on both sides, also referred to as dark chromium. Because the only exposed layers after fabrication are dielectric layer 274 and dark matrix layer 280, a further passivation layer may be unnecessary in the structure of Figs. 7-9.

As shown in Figs. 8 and 9, dark matrix layer 280 overlaps ITO layer 272, so that the overlap areas and the part of dielectric layer 274 between them form a storage capacitor for each cell, shown schematically with dashed lines in Figs. 8 and 9. The overlap areas are sufficiently large and dielectric layer 274 is sufficiently thin that the storage capacitor provides the cell's required storage capacitance.

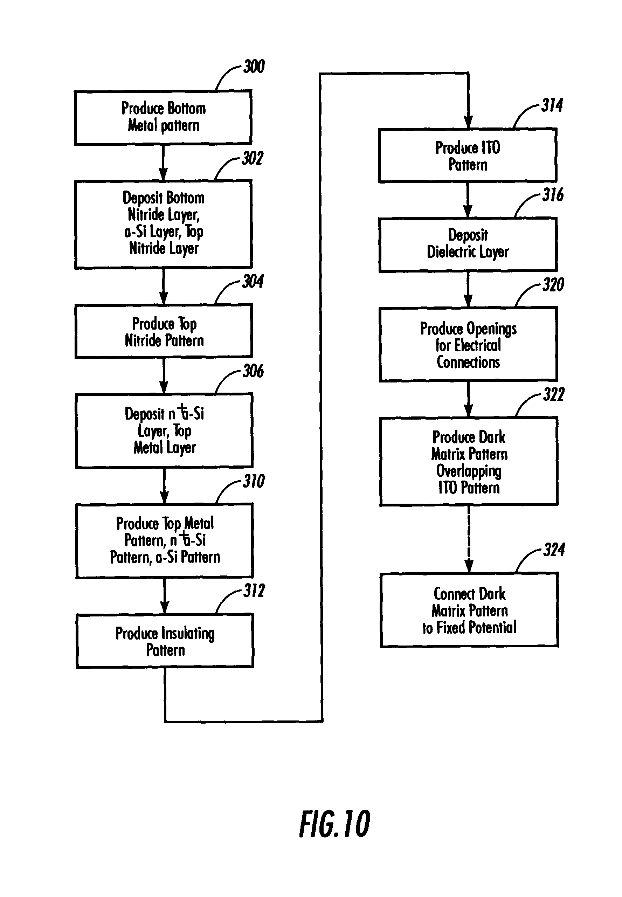

The act in box 300 in Fig. 10 begins by producing a pattern in bottom metal layer 254 on an insulating substrate such as glass. The act in box 300 can be implemented as described in relation to Fig. 3A of European Patent Application 96 303 901.1, depositing chromium, molybdenum, titanium, copper-aluminum, or aluminum capped with a barrier layer of titanium, titanium-tungsten, tantalum, or any other appropriate metal or alloy. The act in box 300 then lithographically patterns the deposited metal to obtain a pattern that includes scan lines 210 and 212 and gate lead 214.

The act in box 302 then deposits bottom nitride layer 260, amorphous silicon layer 262, and top nitride layer 262. The act in box 302 can be implemented as described in relation to Fig. 3B of European Patent Application 96 303 901.1. Bottom nitride layer 260 can be silicon nitride deposited at approximately 300-380°C to a thickness of approximately 300 nm. Amorphous silicon layer 262 can contain approximately 5-12% hydrogen and can be deposited at approximately 230-300°C to a thickness of approximately 30-50 nm. Top nitride layer 264 can be silicon nitride deposited at approximately 200-250°C to a thickness of approximately 100-150 nm.

The act in box 304 then lithographically patterns top nitride layer 264 to produce an etch stopping island as described above in relation to Fig. 9. Top nitride layer 264 can also be retained in crossover regions where data lines cross scan lines, as described in EP-A-681, 235.

The act in box 306 deposits n⁺ amorphous silicon layer 266 and top metal layer 268. The act in box 306 can be implemented as described in relation to Fig. 3C of in European Patent Application 96 303 901.1, with n⁺ amorphous silicon layer 266 including approximately 0.5-2% phosphorous and approximately 5-15% hydrogen, deposited at approximately 200-250°C to a thickness of approximately 100 nm. Top metal layer 268 can include molybdenum-chromium, titanium, tantalum, a multilayered structure with alternating layers of aluminum and titanium-tungsten (TiW), or aluminum with appropriate barrier metal layers on top and bottom, such as titanium, TiW, or tantalum. For example, a first sublayer of TiW can be approximately 50nm thick; then an aluminum sublayer can be approximately 300-1000 nm thick; then a second sublayer of TiW can be approximately 50-100 nm thick.

The act in box 310 lithographically patterns top metal layer 268, n⁺ amorphous silicon layer 266, and amorphous silicon layer 262 to produce channel leads for the transistor as well as data lines 202 and 206. As explained in relation to Fig. 3C of in European Patent Application 96 303 901.1, a multiple step etch can be used after a patterned layer of photoresist has been lithographically produced, etching the second sublayer of TiW, then the aluminum sublayer, then the first sublayer of TiW, then n⁺ amorphous silicon layer 266 and amorphous silicon layer 262, both of which will be etched by a 10:1 solution of CF₄/O₂. As a result of the act in box 310, n⁺ amorphous silicon layer 266 and amorphous silicon layer 262 will be retained wherever top metal layer 268 remains, including the crossover regions mentioned above in relation to box 304.

The act in box 312 deposits and lithographically patterns insulating layer 270, which can include silicon oxynitride, silicon nitride, or silicon oxide, or an organic dielectric coating of polyimide or other suitable polymer layer; insulating layer 270 may be similar to the passivation layer described in relation to Fig. 3D of in European Patent Application 96 303 901.1. For example, insulating layer 270 could be approximately 500-5000 nm thick. The act in box 312 patterns insulating layer 270 to produce openings through which ITO layer 272 can form electrical connections with channel leads, as between transparent electrode 200 and line 204 in Fig. 7.

The act in box 314 then deposits and lithographically patterns ITO layer 272. The act in box 314 can be implemented as explained in relation to Fig. 3E of European Patent Application 96 303 901.1. ITO layer 272 forms transparent electrode 200.

The act in box 316 then deposits dielectric layer 274. Dielectric layer 274 could include the same material as insulating layer 270, deposited under the same conditions for etching compatibility to an appropriate thickness for the required storage capacitance, such as approximately 100-250 nm.

The act in box 320 then lithographically patterns dielectric layer 274, insulating layer 270, and, if necessary, bottom nitride layer 260 to provide openings through which electrical connections can be made. For example, openings can be formed to top metal layer 268 to allow electrical connections between data lines and circuitry that provides data signals. In addition, openings can be formed to bottom metal layer 254 to allow electrical connections between scan lines and circuitry that provides scan signals. And openings can be formed to allow connection of a dark matrix layer to underlying metal layers, through which it can in turn be connected to a fixed potential.

The act in box 322 then deposits and lithographically patterns dark matrix layer 280. The mask used in box 320 can be the complement of that used to pattern ITO layer in box 314, with lines slightly offset to obtain an appropriate overlap for the required storage capacitance, such as approximately 1-2 µm.

The act in box 324 electrically connects the pattern formed in dark matrix layer 280 to circuitry that provides a fixed potential. The electrical connection could be provided through wires or other conductive elements connected to leads in dark matrix layer 280 or in parts of other conductive layers to which it is electrically connected through one or more holes formed by the act in box 320. As suggested by the dashed line between boxes 322 and 324, the act in box 324 may follow other acts that in turn follow box 322, such as acts that make other electrical connections.

After the act in box 324, additional acts can be performed as described in US-A-5, 491, 347 to assemble an AMLCD using the array. Those acts can including spinning on polyimide over dark matrix layer 280, providing further passivation.

The implementations described above provide thin film circuitry on an insulating substrate. The invention could be implemented with other types of circuitry on other types of substrates.

The above implementations provide arrays of cells with particular dimensions and densities. The invention could be implemented with a wide variety of array sizes and shapes, cell sizes and shapes, and cell densities.

The above implementations provide specific dark matrix layouts and materials, but the invention could be implemented with a wide variety of dark matrix layouts and with other materials.

The implementations described above includes layers in a specific sequence, but the sequence of layers could be modified. For example, the above implementations have a dark matrix layer over other layers, but the invention could be implemented with a dark matrix layer under other layers.

The implementations described above use specific cell layouts and circuitry with particular materials and specific geometric and electric characteristics, but the invention could be implemented with many other layouts and types of circuitry with other materials and characteristics.

The implementations described above include top and bottom nitride layers, but many other materials could be used in insulating layers, such as silicon oxynitride, a composite of silicon nitride and silicon oxynitride, or an anodic oxide such as tantalum oxide or aluminum oxide.

The implementations described above includes layers of specified thicknesses, produced from specified materials by specified processes, but other thicknesses could be produced, and other materials and processes could be used. For example, the dielectric layer could be thinner to increase storage capacitance. Rather than a-Si, other semiconductor materials could be used in the semiconductor layers, including but not limited to poly-Si, microcrystalline silicon, SiGe, CdSe, or a composite layer of poly-Si and SiGe. Similarly, various conductive materials could be used in the scan lines and data lines, including but not limited to any appropriate metal or alloy such as Al with or without layers or barrier metals, ITO, MoTa, Cr, MoCr, Ta, Cu, Ti, TiN, W, and any appropriate organic conductive material.

The invention could be applied in many ways, including display arrays, light valve arrays, sensor arrays, and other arrays that interact with images.

The invention has been described in relation to thin-film implementations, but the invention might be implemented with single crystal technology.

## Claims

1. An array (10) of light active cells (20) that includes:
a substrate (12; 44; 150; 250) with a surface (42; 152; 252) at which circuitry is formed;
array circuitry at the surface of the substrate; the array circuitry including:
scan lines (30; 116, 144; 210, 212) in a first layer of conductive material (154; 254);
data lines (32; 110; 202, 206)in a second layer of conductive material (170; 268); and
for each scan line and each data line, a cell (20) that has light active circuitry (22) for receiving electric signals from or providing electric signals to the data line under control of the scan line; the scan line providing scan signals so that the light active circuitry receives or provides electric signals during an addressing time (τ_{A}); and
a patterned layer (180; 280) of dark matrix material that includes, for each cell, a dark matrix part (34; 54) for blocking light in an area of the cell; the dark matrix material being conductive;
characterised in that
electrical connection is provided between each cell's dark matrix part and fixed potential circuitry (36; 70; 102) for holding the dark matrix part at a fixed potential; and in that
the dark matrix material has a conductivity such that capacitively coupled signals received by each cell's dark matrix part from outside the cell decay in significantly less time than the addressing time.

2. The array of claim 1 in which the patterned layer of dark matrix material includes:
a sublayer of highly conductive metal; and
a sublayer of light absorbent material.

3. The array of claim 2 in which the highly conductive metal is aluminum or chromium.

4. The array of any preceding claim in which the dark matrix parts of all the cells are connected to form a single connected component (100) of the dark matrix material; the single connected component being electrically connected to the fixed potential circuitry.

5. The array of any preceding claim in which the scan lines extend in a first direction and the data lines extend in a second direction different than the first direction so that each adjacent pair of scan lines and each adjacent pair of data lines together have edges defining a boundary of a bounded region; each cell's light active circuitry including a light active area that is within the boundary of a bounded region defined by the edges of an adjacent pair of scan lines and an adjacent pair of data lines; and wherein
each cell's dark matrix part including dark matrix lines that block light along the edges of the adjacent pair of scan lines and the adjacent pair of data lines that define the bounded region that includes the cell's light active area; each dark matrix line overlapping the edge of one of the adjacent pair of scan lines or one of the adjacent pair of data lines by a sufficiently small distance that most of each scan line and most of each data line is not overlapped by dark matrix parts.

6. An array (10) comprising:
a substrate (12; 44; 150; 250) with a surface (42; 152; 252) at which circuitry is formed;
array circuitry at the surface of the substrate; the array circuitry comprising:
scan lines (30; 116, 144; 210, 212) extending in a first direction; the scan lines being formed in a first layer of conductive material (154; 254);
data lines (32; 110; 202, 206) extending in a second direction different than the first direction so that each adjacent pair of scan lines and each adjacent pair of data lines together have edges defining a boundary of a bounded region; the data lines being formed in a second layer of conductive material (170; 268);
for each of the bounded regions, a cell (20); each cell comprising light active circuitry (22); each cell's light active circuitry including a light active area that is within the boundary of the cell's bounded region; each cell's light active circuitry receiving signals from or providing signals to one of the data lines under control of one of the scan lines; the scan line providing scan signals so that the light active circuitry receives or provides signals during an addressing time (τ_{A});
a patterned layer (180; 280) of dark matrix material, the dark matrix material being conductive; the patterned layer including, for each cell, dark matrix lines that block light along the edges of the adjacent pair of scan lines and the adjacent pair of data lines that define the bounded region that includes the cell's light active area; each dark matrix line overlapping the edge of one of the adjacent pair of scan lines or one of the adjacent pair of data lines by a sufficiently small distance that most of each scan line and most of each data line is not overlapped by parts of the patterned layer; and
fixed potential circuitry (36; 70; 102) electrically connected to the patterned layer of dark matrix material for holding the patterned layer at a fixed potential;
the dark matrix material being sufficiently conductive that capacitively coupled signals received by each cell's dark matrix lines from scan lines and data lines decay in significantly less time than the addressing time.

7. The array of claim 6 in which each cell's light active circuitry further includes:
a cell electrode (50; 112, 132, 134, 136; 200) in the light active area; the cell electrode receiving signals from or providing signals to one of the data lines under control of one of the scan lines; the scan line providing a scan signal so that the cell electrode receives or provides signals during the addressing time; the cell electrode being bounded by a perimeter;
each cell's dark matrix lines extending along the perimeter of the cell electrode to block light in parts of the cell's bounded region outside the light active area; the cell's dark matrix lines and the cell electrode each having an overlap area (62, 64) in which they overlap; the overlap areas of the cell electrode and of the cell's dark matrix lines extending entirely around the cell electrode's perimeter at a substantially uniform width;
a part (66) of a dielectric layer (52; 274) between the overlap areas of the cell electrode and the cell's dark matrix lines;
a storage capacitor (60) that includes the overlap areas of the cell electrode and of the cell's dark matrix lines and the part of the dielectric layer between them.

8. The array of claim 7 in which the overlap areas of the cell electrode and of the cell's part of the patterned layer extend entirely around the cell electrode's perimeter at a substantially uniform width.

9. The array of claim 7 or claim 8 in which each cell's light active circuitry requires a minimum storage capacitance; the overlap areas of the cell electrode and of the cell's dark matrix part being sufficiently large and the part of the dielectric layer between them being sufficiently thin that the storage capacitor has at least the minimum storage capacitance.

10. A method of producing an array (10) of light active cells (20) that includes:
a substrate (12; 44; 150; 250) with a surface (42; 152; 252) at which circuitry is formed;
array circuitry at the surface of the substrate; the array circuitry including:
scan lines (30; 116, 144; 210, 212) in a first layer of conductive material (154; 254);
data lines (32; 110; 202, 206) in a second layer of conductive material (170; 268); and
for each scan line and each data line, a cell (20) that has light active circuitry (22) for receiving electric signals from or providing electric signals to the data line under control of the scan line; the scan line providing scan signals so that the light active circuitry receives or provides electric signals during an addressing time (τ_{A}); and
a patterned layer (180; 280) of dark matrix material that includes, for each cell, a dark matrix part (34; 54) for blocking light in an area of the cell; the dark matrix material being conductive;
the method comprising:
providing an electrical connection between each cell's dark matrix part and fixed potential circuitry (36; 70; 102) for holding the dark matrix part at a fixed potential; and in that
the dark matrix material has a conductivity such that capacitively coupled signals received by each cell's dark matrix part from outside the cell decay in significantly less time than the addressing time.
